# EUROPÄISCHE PATENTSCHRIFT

(11) **EP 4 530 136 B1**
(45) Veröffentlichungstag und Bekanntmachung des Hinweises auf die Patenterteilung: **01.07.2026**
(21) Anmeldenummer: 24201534.5
(22) Anmeldetag: 20.09.2024
(51) Int. Cl.: B60R 21/34, B60J 11/06, E01H 5/06

(54) **FRONTANBAUSYSTEM ZUM ANBAU VON ANBAUGERÄTEN AN EIN TRÄGERFAHRZEUG**
FRONT ATTACHMENT SYSTEM FOR ATTACHING DEVICES TO A CARRIER VEHICLE
SYSTÈME DE MONTAGE FRONTAL POUR MONTER DES ACCESSOIRES SUR UN VÉHICULE PORTEUR

(30) Priorität: 28.09.2023 DE 202023105650 U
(43) Veröffentlichungstag der Anmeldung: 02.04.2025
(73) Patentinhaber: Kugelmann Maschinenbau e.K., 87675 Rettenbach (DE)
(72) Erfinder: Meckelburg, Harald, 86807 Buchloe (DE)
(74) Vertreter: Tetzner, Michael

(56) Entgegenhaltungen:
- EP-B1- 2 080 429
- EP-B1- 2 700 569
- DE-A1- 102010 032 357
- US-A1- 2011 080 021
- ANONYMOUS: "DIN EN 15432-1 2011-10-00. Winterdienst- und Straßenbetriebsdienstausstattung - Teil 1 : Feste Frontanbauplatten [Winter and road maintenance equipment - Front-mounted equipment - Part 1: Fixed front mounting plates]", 1 October 2011 (2011-10-01), XP009557612, Retrieved from the Internet <URL:https://www.dinmedia.de/de/norm/din-en-15432-1/143661363>

## Beschreibung

Die Erfindung betrifft ein Frontanbausystem zum Anbau von Anbaugeräten an ein Trägerfahrzeug mit einer Frontanbauplatte zur Halterung des Anbaugeräts.

Um eine schnelle Montage und Austauschbarkeit von an Trägerfahrzeugen (Nutzfahrzeuge, Mehrzweckfahrzeuge, Kommunalfahrzeuge, ...) angebauten Komponenten zur gewährleisten, ist es allgemein bekannt, an den Trägerfahrzeugen eine Frontanbauplatte vorzusehen, die es ermöglicht Anbaugeräte, wie beispielsweise einen Schneepflug, eine Kehrmaschine, einen Gießarm oder andere Geräte für den Winterdienst oder den Straßenbetriebsdienst, tragen zu können. Damit die Anbaugeräte verschiedener Gerätehersteller mit unterschiedlichen Trägerfahrzeugen kompatibel sind, werden die Anforderungen an die Frontanbauplatte in Normen, wie beispielsweise der Europäischen Norm EN 15432-1 festgelegt.

Die am Trägerfahrzeug angebrachte Frontanbauplatte stellt jedoch ohne montiertes Anbaugerät durch die Kantenbereiche und Hohlräume ein erhöhtes Verletzungsrisiko für Fußgänger, Radfahrer und Motorradfahrer dar. Es ist daher vorgeschrieben, dass die Frontanbauplatte bei nicht montiertem Anbaugerät mit eine Schutzabdeckung versehen wird. Aus der EP 2 700 569 B1 ist hierfür eine Anbauplatten-Abdeckung bekannt, die mittels wenigstens einer Magnetverbindung lösbar an der Frontanbauplatte gehaltert wird.

Wenngleich die Magnetverbindung eine einfache, schnelle und sichere Anbringung und Abnahme der Anbauplatten-Abdeckung ermöglicht, besteht aber der Nachteil, dass die sehr sperrige Schutzabdeckung in geeigneter Weise gelagert werden muss, bis sie wieder auf der Frontanbauplatte anzubringen ist. Oft besteht dann auch die Gefahr, dass eine am Boden liegende Schutzabdeckung versehentlich beschädigt wird. Ist der Lagerplatz nicht in der Nähe des Fahrzeugs vorgesehen, ist das Verstauen oder Holen der Schutzabdeckung mit einem erhöhten Aufwand verbunden. Eine Fahrt ohne Schutzabdeckung und die damit einhergehende Inkaufnahme eines erhöhten Verletzungsrisiko für Fußgänger, Radfahrer und Motorradfahrer ist dann nicht ausgeschlossen.

Aus der EP 2 080 429 B1 ist ferner ein Zapfwellenschutz mit einer U-förmig ausgebildeten und zwei seitliche Schenkelabschnitte aufweisenden Abdeckung bekannt, die an einem Grundbauteil schwenkbar befestigt und in verschiedene Schutzstellungen verschwenkbar ist.

Der Erfindung liegt die Aufgabe zugrunde die Schutzabdeckung an der Frontanbauplatte eines Trägerfahrzeugs zu verbessern.

Erfindungsgemäß wird diese Aufgabe durch ein Frontanbausystem zum Anbau von Anbaugeräten an ein Trägerfahrzeug gelöst, das eine Frontanbauplatte zur Halterung des Anbaugeräts und eine Schutzabdeckung aufweist, wobei die Schutzabdeckung zumindest einen Teil der Frontanbauplatte kantenübergreifend abdeckt und zumindest zwei seitliche Schutzklappen aufweist, die zwischen einer Abdeckstellung und einer Öffnungsstellung schwenkbar am Frontanbausystem gehaltert sind. Weiterhin ist seitlich in der Frontanbauplatte wenigstens eine hydraulische und/oder pneumatische Schnellkupplungseinrichtung zum hydraulischen und/oder pneumatischen Anschluss des Anbaugeräts vorgesehen, die durch eine der zwei seitlichen Schutzklappen in der Abdeckstellung abgedeckt ist.

Während die Schutzabdeckung der EP 2 700 569 B1 und andere bisher bekannte Schutzabdeckungen zur Anbringung eine Anbaugeräts abgenommen und verstaut werden müssen, ist erfindungsgemäß lediglich ein Aufklappen der Schutzklappen erforderlich. Da die Schutzklappen in der aufgeklappten Stellung an der Frontanbauplatte verbleiben, entfällt die Aufbewahrung an einem anderen Ort. Auch das Risiko einer Beschädigung durch unsachgemäße Lagerung fällt dadurch weg.

In einer Ausgestaltung der Erfindung ist vorgesehen, dass die zwei seitlichen Schutzklappen zumindest in der Abdeckstellung durch Verriegelungsmittel fixierbar sind. Hier bei kommen bevorzugt Magnetverbindungen in Betracht. Es sind aber auch Gasdruckfedern, Riegel oder dgl. zur Verriegelung denkbar. Selbstverständlich kann auch eine entsprechende Fixierung in der Öffnungsstellung vorgesehen werden.

Je nach Ausstattung des Frontanbausystems kann auf beiden Seiten eine solche hydraulische und/oder pneumatische Schnellkupplungseinrichtung seitlich in der Frontanbauplatte verbaut sein, die jeweils durch eine der zwei seitlichen Schutzklappen in der Abdeckstellung abgedeckt wird.

Die seitliche(n) Schutzklappe(n) zum Abdecken der hydraulischen und/oder pneumatischen Schnellkupplungseinrichtung(en) können zudem eine mit der hydraulischen und/oder pneumatischen Schnellkupplungseinrichtung in der Abdeckstellung in Wirkkontakt kommende Schmutzabdeckung aufweisen, um diese noch besser gegen Verschmutzung zu schützen. Dadurch sind separate Abdeckungen, die leicht verlegt oder verloren werden, nicht nötig.

Ferner kann wenigstens eine elektrische Steckdose zum elektrischen Anschluss des Anbaugeräts seitlich in der Frontanbauplatte untergebracht werden, die ebenfalls durch eine der zwei seitlichen Schutzklappen in der Abdeckstellung abgedeckt und damit geschützt ist. Die Integration der hydraulische und/oder pneumatische Schnellkupplungseinrichtung und der elektrischen Steckdose seitlich in der Frontanbauplatte hat den Vorteil, dass keine zusätzlichen fahrzeugspezifischen Halter vorgesehen werden müssen. Außerdem kann die Montage der hydraulische und/oder pneumatische Schnellkupplungseinrichtung und der Steckdose bereits im Werk erfolgen, sodass der Anbau ans Trägerfahrzeug beim Kunden mit nur wenigen Montageschritten verbunden ist.

Frontanbauplatten weisen üblicherweise zwei Fangtaschen zur Aufnahme entsprechender Fangklauen des Anbaugeräts und wenigstens ein Paar seitlicher Schlitze zum Fixieren des Anbaugeräts an der Frontanbauplatte auf. Da insbesondere die seitlichen Schlitze ein Verletzungsrisiko für Fußgänger, Radfahrer oder Motorradfahrer darstellen, sind die seitlichen Schutzklappen so ausgebildet, dass sie das Paar seitlicher Schlitze in der Abdeckstellung abdecken.

In einer weiteren Ausgestaltung der Erfindung ist zur Abdeckung der zwei Fangtaschen wenigstens eine, vorzugsweise für jede Fangtasche jeweils eine obere Schutzklappe vorgesehen, die zur Anbringung eines Anbaugeräts von einer Abdeckstellung in eine Öffnungsstellung gebracht werden können.

Sowohl die beiden seitlichen Schutzklappen als auch die optional vorhandenen oberen Schutzklappen sind mittels geeigneter Scharniere an der Frontanbauplatte gehaltert.

Gemäß einer weiteren Besonderheit ist in der Frontanbauplatte ein Hydraulikblock untergebracht, der mit der oder den seitlich in der Frontanbauplatte verbauten, hydraulischen Schnellkupplungseinrichtungen in Wirkverbindung steht, wobei der Hydraulikblock zwei oder drei hydraulische Eingangsanschlüsse zur hydraulischen Verbindung mit dem Trägerfahrzeug und mehrere hydraulische Ausgangsanschlüsse zur hydraulischen Verbindung mit der oder den hydraulischen Schnellkupplungseinrichtungen aufweist. Dies hat den Vorteil, dass nicht alle Hydraulikleitungen vom Trägerfahrzeug zur Frontanbauplatte geführt werden müssen. Die Hydraulikleitungen vom Hydraulikblock zu der oder den hydraulischen Schnellkupplungseinrichtungen können daher schon im Werk komplett montiert werden, sodass nach Anbringung des Frontanbausystems an das Trägerfahrzeug lediglich noch zwei oder drei Hydraulikleitungen (Druckleitung, Rückleitung und ggf. eine Steuerleitung) des Trägerfahrzeugs an den Hydraulikblock angeschlossen werden müssen.

Der Hydraulikblock steht mit einem ebenfalls in der Frontanbauplatte verbauten Steuergerät in Verbindung. Das Steuergerät hat dann die Aufgabe die hydraulischen Eingangsanschlüsse des Hydraulikblocks durch Ansteuerung entsprechender Ventile auf die gerade benötigen Ausgangsanschlüsse zu schalten.

Dadurch dass in der Frontanbauplatte die hydraulischen Schnellkupplungseinrichtungen, der Hydraulikblock und das Steuergerät bereits im Werk eingebaut und verschaltet werden, ist der Anbau des Frontanbausystems beim Kunden mit nur wenigen Montageschritten möglich. Letztendlich müssen lediglich zwei oder drei Hydraulikschläuche, ein Elektrokabel und vier Bolzen zur Halterung des Frontanbausystems an der Fahrzeugfront des Trägerfahrzeugs montiert werden. Erfindungsgemäß ist die mechanische Verbindung zum Trägerfahrzeug nur einmal für die Frontanbauplatte auszuführen, während bei herkömmlichen Systemen stattdessen für die Frontanbauplatte, die elektrische Steckdose und die pneumatischen und/oder hydraulischen Schnellkupplungseinrichtungen jeweils fahrzeugspezifische Halter separat zu montieren sind.

Die von den beiden seitlichen Schutzklappen abgedeckten Bereiche auf der Vorderseite der Frontanbauplatte werden vorzugsweise derart ausgespart, sodass die sich in der Abdeckstellung befindlichen seitlichen Schutzklappen und die nicht abgedeckten Bereiche der Vorderseite der Frontanbauplatte bündig aneinander anschließen und dadurch eine Ebene bilden. In entsprechender Art und Weise können auch die zur Abdeckung der beiden Fangtaschen vorgesehene obere(n) Schutzklappe(n) kantenübergreifend ausgebildet sein, sodass die von der (den) oberen Schutzklappe(n) abgedeckten Bereiche auf der Vorderseite der Frontanbauplatte ebenfalls derart ausgespart werden, sodass die sich in der Abdeckstellung befindlichen oberen Schutzklappen und die nicht abgedeckten Bereiche der Vorderseite der Frontanbauplatte bündig aneinander anschließen. Als Vorderseite der Frontanbauplatte wird die in moniertem Zustand in Vorwärtsfahrtrichtung des Trägerfahrzeugs weisende Seite angesehen. Die Frontanbauplatte weist somit in montiertem Zustand mit ihrer Rückseite zum Trägerfahrzeug.

Die Frontanbauplatte weist gemäß einer weiteren Ausgestaltung eine Aussparung für eine Radarsensor für den Totwinkel-Assistent auf. Dabei kann die Frontanbauplatte zumindest im Bereich der Aussparung einen sich quer zur Rückseite erstreckenden Kragen aufweist, um die Bereiche auf der Rückseite der Frontanbauplatte abzudecken.

Im Übrigen sind alle relevanten Kantenbereiche der Frontanbauplatte und der seitlichen und oberen Schutzklappen mit ausreichend großen Abrundungsradien von wenigstens 2.5 mm versehen, um der Regelung Nr. 61 der Wirtschafskommission der Vereinten Nationen für Europa (UN/ECE) zu entsprechen.

Weitere Ausgestaltungen der Erfindung werden anhand der nachfolgenden Beschreibung eines Ausführungsbeispiels und der Zeichnung näher erläutert.

In der Zeichnung zeigen
- Fig. 1: eine dreidimensionale Vorderansicht des Frontanbausystems in der Öffnungsstellung der seitlichen und oberen Schutzklappen,
- Fig. 2: eine dreidimensionale Vorderansicht des Frontanbausystem in der Abdeckstellung der seitlichen und oberen Schutzklappen,
- Fig. 3: eine dreidimensionale Rückansicht des Frontanbausystem in der Abdeckstellung der seitlichen und oberen Schutzklappen,
- Fig. 4: eine Aufsicht des Frontanbausystem in der Abdeckstellung der seitlichen und oberen Schutzklappen und
- Fig. 5: eine Aufsicht des Frontanbausystem in der Öffnungsstellung der seitlichen und oberen Schutzklappen.

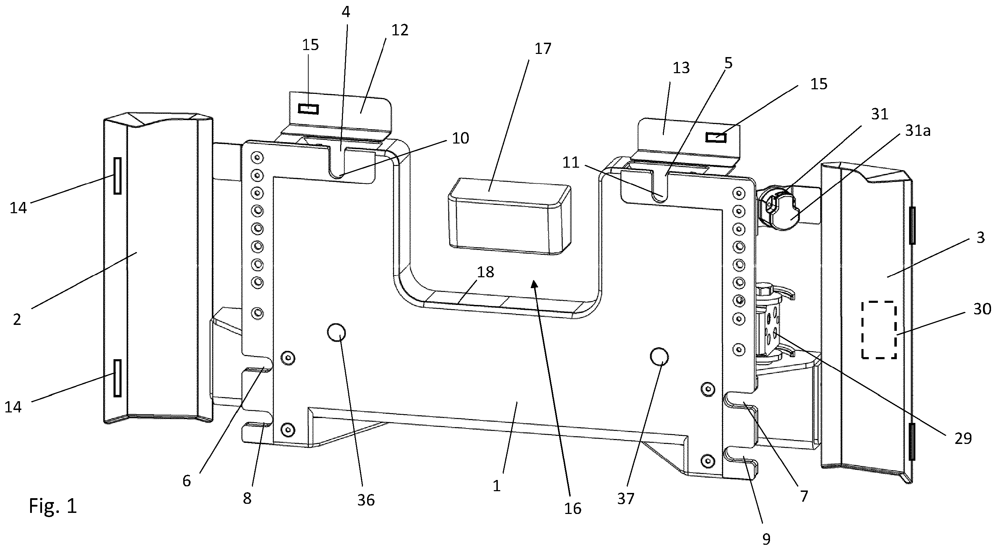

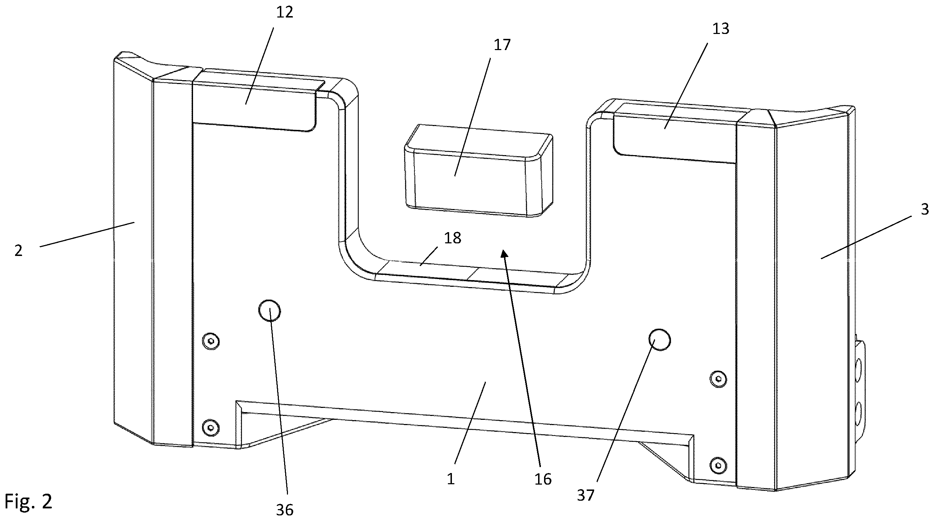

Das in den Fig. 1 und 2 dargestellte Frontanbausystem weist eine Frontanbauplatte 1 zur Halterung eines Anbaugeräts und eine Schutzabdeckung mit zwei seitlichen Schutzklappen 2, 3 auf, die zwischen einer Abdeckstellung (Fig. 2) und einer Öffnungsstellung (Fig. 1) schwenkbar am Frontanbausystem gehaltert sind. Die Frontanbauplatte 1 ist in üblicher Art und Weise mit zwei Fangtaschen 4, 5 zur Aufnahme entsprechender Fangklauen des Anbaugeräts und wenigstens einem Paar seitlicher Schlitze 6, 7 zum Fixieren des Anbaugeräts an der Frontanbauplatte ausgestattet. Des Weiteren sind ein zweites Paar seitlicher Schlitze 8, 9, Bohrungen 36, 37 und im Bereich der Fangklauen 4, 5 obere Schlitze 10, 11 vorgesehen, die weitere Befestigungspunkte für die Anbaugeräte bieten.

Die seitlichen Schutzklappen 2, 3 sind so ausgebildet, dass sie in der Abdeckstellung die Seiten der Frontanbauplatte 1 und die seitlichen Schlitze 6 - 9 abdecken, sodass die Seitenbereiche der Frontanbauplatte 1 in der Abdeckstellung gemäß Fig. 2 kantenübergreifend abdeckt sind.

Im dargestellten Ausführungsbeispiel sind für die beiden Fangtaschen 4, 5 jeweils eine obere Schutzklappe 12, 13 vorgesehen, welche in der Abdeckstellung gemäß Fig. 2 die Fangtaschen 4, 5 und die Teilbereiche auf der Vorderseite 1a der Frontanbauplatte, in denen sich die oberen Schlitze 10, 11 befinden, kantenübergreifend abdecken. Die oberen Schutzklappen 12, 13 sind hierzu im Querschnitt L-förmig ausgebildet und mit geeigneten Scharnieren an der Frontanbauplatte 1 gehaltert.

Die zwei seitlichen Schutzklappen 2, 3 als auch die oberen Schutzklappen 12, 13 sind zumindest in der Abdeckstellung gemäß Fig. 2 durch Verriegelungsmittel 14, 15 insbesondere eine Magnetverbindung, fixierbar. Auch in der Öffnungsstellung gemäß Fig. 1 können geeignete Verriegelungsmittel vorgesehen werden, um die Schutzklappen 2, 3 bzw. 12, 13 in der Öffnungsstellung zu halten.

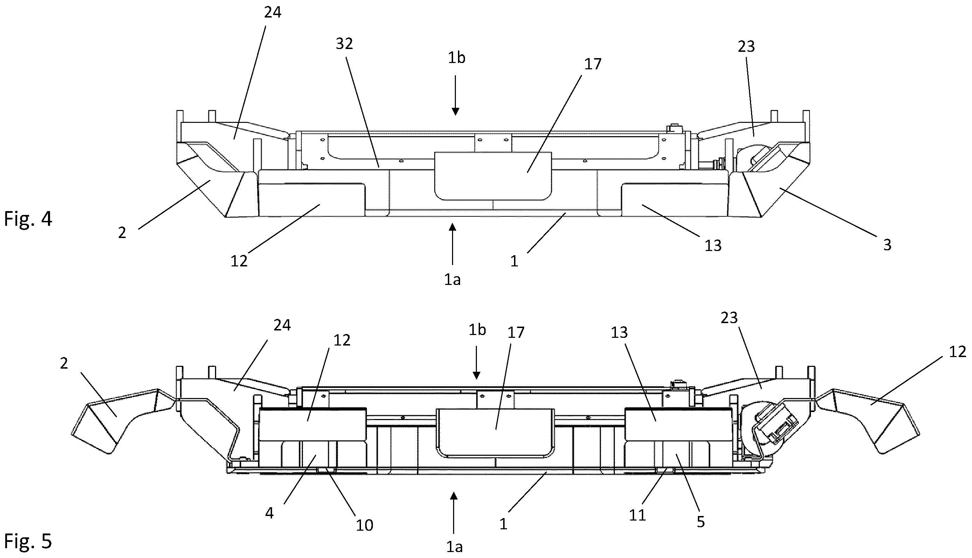

Aus Fig. 1 und 4 ist ersichtlich, dass die von den beiden seitlichen Schutzklappen 2, 3 und den oberen Schutzklappen 12, 13 abgedeckten Bereiche der Vorderseite 1a der Frontanbauplatte 1 derart ausgespart sind, sodass die sich in der Abdeckstellung befindlichen Schutzklappen 2, 3 bzw. 12, 13 und die nicht abgedeckten Bereiche der Vorderseite 1a der Frontanbauplatte bündig aneinander anschließen. Die Schutzklappen 2, 3 bzw. 12, 13 bilden somit keine vorstehenden Teile, die ein erhöhtes Verletzungsrisiko darstellen könnten.

In Fig. 1 ist außerdem noch ein Aussparung 16 in der Frontanbauplatte ersichtlich, die so ausgeformt ist, dass ein in diesem Bereich angeordneter Radarsensor 17 als Totwinkel-Assistent seine Funktion vollumfänglich erfüllen kann. Um die Verletzungsgefahr durch den Kantenbereich im Bereich der Aussparung 16 zu minimieren, weist die Frontanbauplatte zumindest im Bereich der Aussparung 16 einen sich quer zur Rückseite 1b der Frontanbauplatte 1 erstreckenden Kragen 18 auf, der sich bis zu den Fangtaschen 4, 5 erstreckt.

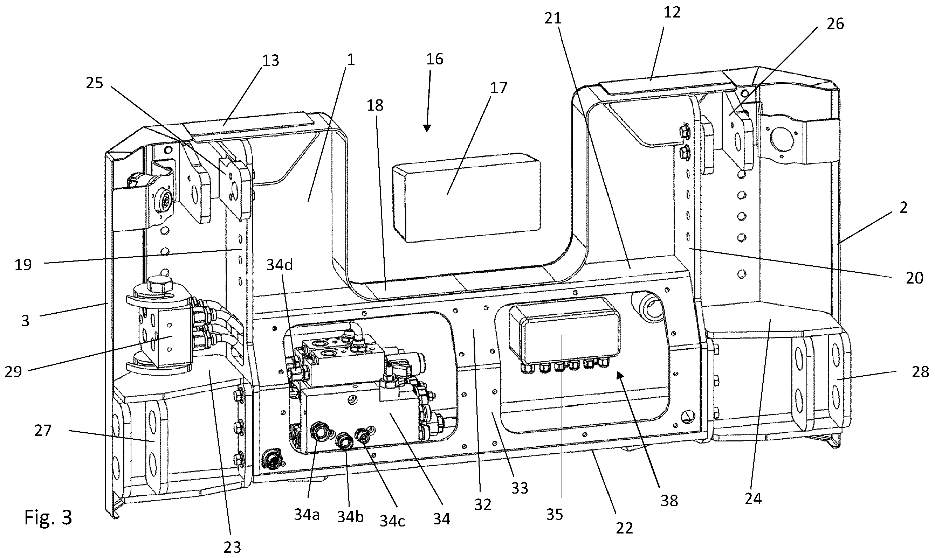

Aus der in Fig. 3 gezeigten Rückseite 1b der Frontanbauplatte 1 sind vertikale und horizontale Versteifungsrippen 19, 20 ersichtlich, welche die Frontanbauplatte 1 versteifen und zur Befestigung von seitlichen Anbaukonsolen 23, 24 und Einhängepunkten 25, 26 dienen. Im Bereich der Anbaukonsolen 23, 24 sind zwei weitere Einhängepunkte 27, 28 vorgesehen, die zusammen mit den Einhängepunkten 25, 26 zur Montage des Frontanbausystems an ein Trägerfahrzeug dienen.

Weiterhin ist wenigstens eine hydraulische und/oder pneumatische Schnellkupplungseinrichtung 29 zum hydraulischen und/oder pneumatischen Anschluss des Anbaugeräts vorgesehen, die seitlich in der Frontanbauplatte, hier im Bereich der seitlichen Anbaukonsole 23, untergebracht ist und durch die seitliche Schutzklappe 3 in der Abdeckstellung abgedeckt ist. Die seitliche Schutzklappe 3 kann zum Abdecken der hydraulischen und/oder pneumatischen Schnellkupplungseinrichtung 29 eine mit der hydraulischen und/oder pneumatischen Schnellkupplungseinrichtung 29 in der Abdeckstellung in Kontakt kommende Schmutzabdeckung 30 aufweisen, wie das in Fig. 1 gestrichelt dargestellt ist.

Ferner ist seitlich in der Frontanbauplatte auch eine elektrische Steckdose 31 zum elektrischen Anschluss des Anbaugeräts untergebracht ist, die durch ebenfalls durch die seitliche Schutzklappe 3 in der Abdeckstellung abgedeckt wird und damit geschützt ist. Die elektrische Steckdose 31 kann eine eigene Abdeckung 31a oder eine an der Schutzklappe 2 angebrachte und in der Abdeckstellung mit der elektrischen Steckdose 31 in Kontakt kommende Abdeckung aufweisen.

Durch die beiden vertikalen Versteifungsrippen 19, 20 und die beiden horizontalen Versteifungsrippen 21, 22 und zusätzliche Bleche 32, 33 wird auf der Rückseite 1b ein Raum 38begrenzt, der zur Unterbringung eines Hydraulikblocks 34 dient, der mit der seitlich in der Frontanbauplatte verbauten, hydraulischen Schnellkupplungseinrichtung 29 in Verbindung steht, wobei der Hydraulikblock 34 zwei oder drei hydraulische Eingangsanschlüsse 34a, 34b, 34c zur hydraulischen Verbindung mit dem Trägerfahrzeug und mehrere hydraulische Ausgangsanschlüsse 34d zur hydraulischen Verbindung mit der wenigstens einen hydraulischen Schnellkupplungseinrichtung 29 aufweist. Im Rahmen der Erfindung könnte eine weiter hydraulische und/oder pneumatische Schnellkupplungseinrichtung im Bereich der anderen seitlichen Anbaukonsole 24 vorgesehen werden, sodass über den Hydraulikblock bis zu acht verschiedene Hydraulikleitungen ansprechbar wären. Die Steuerung des Hydraulikblocks 34 erfolgt über ein Steuergerät 35, das ebenfalls im Raum 38 untergebracht ist.

## Patentansprüche

1. Frontanbausystem zum Anbau von Anbaugeräten an ein Trägerfahrzeug mit einer Frontanbauplatte (1) zur Halterung des Anbaugeräts und einer Schutzabdeckung, die zumindest einen Teil der Frontanbauplatte (1) kantenübergreifend abdeckt,
wobei die Schutzabdeckung zumindest zwei seitliche Schutzklappen (2, 3) aufweist, die zwischen einer Abdeckstellung und einer Öffnungsstellung schwenkbar am Frontanbausystem gehaltert sind und wenigstens eine hydraulische und/oder pneumatische Schnellkupplungseinrichtung (29) zum hydraulischen und/oder pneumatischen Anschluss des Anbaugeräts vorgesehen ist, die seitlich in der Frontanbauplatte (1) untergebracht ist und durch eine der zwei seitlichen Schutzklappen (2, 3) in der Abdeckstellung abgedeckt ist.

2. Frontanbausystem nach Anspruch 1, **dadurch gekennzeichnet, dass** die zwei seitlichen Schutzklappen (2, 3) zumindest in der Abdeckstellung durch Verriegelungsmittel (14, 15) fixierbar sind.

3. Frontanbausystem nach Anspruch 1, **dadurch gekennzeichnet, dass** die seitliche Schutzklappe (2, 3) zum Abdecken der hydraulischen und/oder pneumatischen Schnellkupplungseinrichtung (29) eine mit der hydraulischen und/oder pneumatischen Schnellkupplungseinrichtung (29) in der Abdeckstellung in Wirkkontakt kommende Schmutzabdeckung (30) aufweist.

4. Frontanbausystem nach Anspruch 1, **dadurch gekennzeichnet, dass** ferner wenigstens eine elektrische Steckdose (31) zum elektrischen Anschluss des Anbaugeräts seitlich in der Frontanbauplatte (1) untergebracht ist, die durch eine der zwei seitlichen Schutzklappen (2, 3) in der Abdeckstellung abgedeckt ist.

5. Frontanbausystem nach Anspruch 1, **dadurch gekennzeichnet, dass** die Frontanbauplatte (1) zwei Fangtaschen (4, 5) zur Aufnahme entsprechender Fangklauen des Anbaugeräts und wenigstens ein Paar seitlicher Schlitze (6, 7; 8, 9) zum Fixieren des Anbaugeräts an der Frontanbauplatte (1) aufweist.

6. Frontanbausystem nach Anspruch 5, **dadurch gekennzeichnet, dass** die seitlichen Schutzklappen (2, 3) das wenigstens eine Paar seitlicher Schlitze (6, 7; 8, 9) in der Abdeckstellung abdecken.

7. Frontanbausystem nach Anspruch 5, **dadurch gekennzeichnet, dass** zur Abdeckung der zwei Fangtaschen (4, 5) wenigstens eine, vorzugsweise für jede Fangtasche (4, 5) jeweils eine obere Schutzklappe (12, 13) vorgesehen ist.

8. Frontanbausystem nach Anspruch 1, **dadurch gekennzeichnet, dass** in der Frontanbauplatte (1) ein Hydraulikblock (34) untergebracht ist, der mit einer oder zwei, seitlich in der Frontanbauplatte (1) verbauten, hydraulischen Schnellkupplungseinrichtungen (29) in Wirkverbindung steht, wobei der Hydraulikblock (34) zwei oder drei hydraulische Eingangsanschlüsse (34a, 34b, 34c) zur hydraulischen Verbindung mit dem Trägerfahrzeug und mehrere hydraulische Ausgangsanschlüsse (34d) zur hydraulischen Verbindung mit der wenigstens einen hydraulischen Schnellkupplungseinrichtung (29) aufweist.

9. Frontanbausystem nach Anspruch 8, **dadurch gekennzeichnet, dass** in der Frontanbauplatte (1) weiterhin ein Steuergerät (35) zur Steuerung des Hydraulikblocks (34) vorgesehen ist.

10. Frontanbausystem nach Anspruch 1, **dadurch gekennzeichnet, dass** in der Frontanbauplatte (1) eine Aussparung (16) für eine Radarsensor (17) vorgesehen ist.

11. Frontanbausystem nach Anspruch 10, **dadurch gekennzeichnet, dass** die Frontanbauplatte (19 eine Vorderseite (1a) zur Halterung des Anbaugeräts und eine Rückseite (1b) zur Befestigung des Frontanbausystems am Trägerfahrzeug aufweist, wobei die Frontanbauplatte (1) zumindest im Bereich der Aussparung (16) sich quer zur Rückseite (1b) der Frontanbauplatte (1) erstreckenden Kragen (18) aufweist.

12. Frontanbausystem nach Anspruch 1, **dadurch gekennzeichnet, dass** die Frontanbauplatte (1) eine Vorderseite (1a) aufweist und die von den beiden seitlichen Schutzklappen (2, 3) abgedeckten Bereiche auf der Vorderseite der Frontanbauplatte (1) derart ausgespart sind, sodass die sich in der Abdeckstellung befindlichen Schutzklappen 2, 3) und die nicht abgedeckten Bereiche der Vorderseite der Frontanbauplatte (1) bündig aneinander anschließen.

13. Frontanbausystem nach Anspruch 1, **dadurch gekennzeichnet, dass** an einer Rückseite (1b) der Frontanbauplatte (1) mehrere Einhängepunkte (25 - 28) zur Befestigung des Frontanbausystems am Trägerfahrzeug vorgesehen sind.

## Claims

1. Front attachment system for attaching devices to a carrier vehicle with a front attachment plate (1) to hold the device and a protective cover that covers at least a part of the front attachment plate (1) across the edges,
wherein the protective cover has at least two lateral protective flaps (2, 3), which are pivotably mounted on the front attachment system between a covering position and an open position, and at least one hydraulic and/or pneumatic quick coupling device (29) is provided for the hydraulic and/or pneumatic connection of the device, which is accommodated laterally in the front attachment plate (1) and is covered by one of the two lateral protective flaps (2, 3) in the covering position.

2. Front attachment system according to claim 1, **characterised in that** the two lateral protective flaps (2, 3) can be fixed by locking means (14, 15) at least in the covering position.

3. Front attachment system according to claim 1, **characterised in that** the lateral protective flap (2, 3) for covering the hydraulic and/or pneumatic quick coupling device (29) has a dirt cover (30) that comes into operative contact with the hydraulic and/or pneumatic quick coupling device (29) in the covering position.

4. Front attachment system according to claim 1, **characterised in that** at least one electrical socket (31) for the electrical connection of the device is furthermore accommodated laterally in the front attachment plate (1), which is covered by one of the two lateral protective flaps (2, 3) in the covering position.

5. Front attachment system according to claim 1, **characterised in that** the front attachment plate (1) has two catch pockets (4, 5) for receiving corresponding catch claws of the device and at least one pair of lateral slots (6, 7; 8, 9) for fixing the device to the front attachment plate (1).

6. Front attachment system according to claim 5, **characterised in that** the lateral protective flaps (2, 3) cover the at least one pair of lateral slots (6, 7; 8, 9) in the covering position.

7. Front attachment system according to claim 5, **characterised in that** at least one upper protective flap (12, 13), preferably one upper protective flap for each catch pocket (4, 5), is provided to cover the two catch pockets (4, 5).

8. Front attachment system according to claim 1, **characterised in that** a hydraulic block (34) is accommodated in the front attachment plate (1), which is operatively connected to one or two hydraulic quick coupling devices (29) installed laterally in the front attachment plate (1), the hydraulic block (34) having two or three hydraulic input connections (34a, 34b, 34c) for hydraulic connection to the carrier vehicle and a plurality of hydraulic output connections (34d) for hydraulic connection to the at least one hydraulic quick coupling device (29).

9. Front attachment system according to claim 8, **characterised in that** a control device (35) for controlling the hydraulic block (34) is furthermore provided in the front attachment plate (1).

10. Front attachment system according to claim 1, **characterised in that** a recess (16) for a radar sensor (17) is provided in the front attachment plate (1).

11. Front attachment system according to claim 10, **characterised in that** the front attachment plate (19) has a front side (1a) to hold the device and a rear side (1b) to attach the front attachment system to the carrier vehicle, wherein the front attachment plate (1) has collars (18) extending transversely to the rear side (1b) of the front attachment plate (1) at least in the region of the recess (16).

12. Front attachment system according to claim 1, **characterised in that** the front attachment plate (1) has a front side (1a) and the regions covered by the two lateral protective flaps (2, 3) are recessed on the front side of the front attachment plate (1) in such a way that the protective flaps (2, 3) located in the covering position and the uncovered regions of the front side of the front attachment plate (1) are connected to one another flush.

13. Front attachment system according to claim 1, **characterised in that** a plurality of suspension points (25 - 28) are provided on a rear side (1b) of the front attachment plate (1) to attach the front attachment system to the carrier vehicle.

## Revendications

1. Système de montage frontal pour monter des accessoires sur un véhicule porteur doté d'une plaque de montage frontal (1) destinée à la fixation des accessoires et d'un couvercle de protection qui recouvre au moins une partie de la plaque de montage frontal (1) de façon à s'étendre sur les bords,
ledit couvercle de protection comportant au moins deux volets de protection latéraux (2, 3), qui sont maintenus pivotants sur le système de montage frontal entre une position de recouvrement et une position d'ouverture, et au moins un dispositif hydraulique et/ou pneumatique de raccordement rapide (29) étant pourvu pour le raccordement hydraulique et/ou pneumatique des accessoires, qui est logé latéralement dans la plaque de montage frontal (1) et est recouvert par l'un des deux volets de protection latéraux (2, 3) dans la position de recouvrement.

2. Système de montage frontal selon la revendication 1, **caractérisé en ce que** les deux volets de protection latéraux (2, 3) peuvent être fixés au moins dans la position de recouvrement par des moyens de verrouillage (14, 15).

3. Système de montage frontal selon la revendication 1, **caractérisé en ce que** les volets de protection latéraux (2, 3) destinés à recouvrir le dispositif hydraulique et/ou pneumatique de raccordement rapide (29) comportent un couvercle anti-débris (30) entrant en contact actif avec le dispositif hydraulique et/ou pneumatique de raccordement rapide (29) dans la position de recouvrement.

4. Système de montage frontal selon la revendication 1, **caractérisé en ce que**, en outre, au moins une prise électrique (31) destinée au raccordement électrique des accessoires est logée latéralement dans la plaque de montage frontal (1), qui est recouverte par l'un des deux volets de protection latéraux (2, 3) dans la position de recouvrement.

5. Système de montage frontal selon la revendication 1, **caractérisé en ce que** la plaque de montage frontal (1) comporte deux poches d'accrochage (4, 5) destinées à la réception des pattes d'accrochage correspondantes des accessoires et au moins une paire de fentes latérales (6, 7 ; 8, 9) destinées à la fixation des accessoires sur la plaque de montage frontal (1).

6. Système de montage frontal selon la revendication 5, **caractérisé en ce que** les volets de protection latéraux (2, 3) recouvrent au moins une paire de fentes latérales (6, 7 ; 8, 9) dans la position de recouvrement.

7. Système de montage frontal selon la revendication 5, **caractérisé en ce qu'**au moins un volet de protection supérieur (12, 13) est fourni pour le recouvrement des deux poches d'accrochage (4, 5), de préférence pour chaque poche d'accrochage (4, 5).

8. Système de montage frontal selon la revendication 1, **caractérisé en ce qu'**un bloc hydraulique (34) est logé dans la plaque de montage frontal (1), qui est en liaison active avec un ou deux dispositifs hydrauliques de raccordement rapide (29) montés latéralement dans la plaque de montage frontal (1), ledit bloc hydraulique (34) comportant deux ou trois raccords hydrauliques d'entrée (34a, 34b, 34c) destinés à la liaison hydraulique avec le véhicule porteur et plusieurs raccords hydrauliques de sortie (34d) destinés à la liaison hydraulique avec ledit au moins un dispositif hydraulique de raccordement rapide (29).

9. Système de montage frontal selon la revendication 8, **caractérisé en ce qu'**un appareil de commande (35) destiné à la commande du bloc hydraulique (34) est en outre pourvu dans la plaque de montage frontal (1).

10. Système de montage frontal selon la revendication 1, **caractérisé en ce qu'**une cavité (16) pour un capteur radar (17) est pourvue dans la plaque de montage frontal (1).

11. Système de montage frontal selon la revendication 10, **caractérisé en ce que** la plaque de montage frontal (19) comporte une face avant (1a) destinée à la fixation des accessoires et une face arrière (1b) destinée à la fixation du système de montage frontal sur le véhicule porteur, ladite plaque de montage frontal (1) comportant, au moins dans la zone de la cavité (16), des rebords (18) s'étendant transversalement par rapport à la face arrière (1b) de la plaque de montage frontal (1).

12. Système de montage frontal selon la revendication 1, **caractérisé en ce que** la plaque de montage frontal (1) comporte une face avant (1a) et les zones recouvertes par les deux volets de protection latéraux (2, 3) sont évidées sur la face avant de la plaque de montage frontal (1) de sorte que les volets de protection (2, 3) se trouvant dans la position de recouvrement et les zones non recouvertes de la face avant de la plaque de montage frontal (1) se raccordent les uns aux autres de manière affleurante.

13. Système de montage frontal selon la revendication 1, **caractérisé en ce que** plusieurs points de montage (25 à 28) sont pourvus sur une face arrière (1b) de la plaque de montage frontal (1) pour la fixation du système de montage frontal sur le véhicule porteur.
